# EUROPEAN PATENT SPECIFICATION

(11) **EP 4 128 667 B1**
(45) Date of publication and mention of the grant of the patent: **19.03.2025**
(21) Application number: 20723765.2
(22) Date of filing: 21.04.2020
(51) Int. Cl.: H04L 43/12, H04L 41/046, H04L 43/026, H04L 43/06

(54) **DISTRIBUTED NETWORK FLOW RECORD**
VERTEILTE NETZWERKFLUSSAUFZEICHNUNG
ENREGISTREMENT DE FLUX DE RÉSEAU DISTRIBUÉ

(43) Date of publication of application: 08.02.2023
(73) Proprietor: HUAWEI TECHNOLOGIES CO., LTD., Shenzhen, Guangdong 518129 (CN)
(72) Inventor: SONG, Haoyu, San Jose, California 95124 (US)
(74) Representative: Körber, Martin Hans
(86) International application number: PCT/US2020/029071
(87) International publication number: WO 2021/216043

(56) References cited:
- US-B1- 6 839 751
- US-B1- 8 331 234
- JUNIPER NETWORKS: "Juniper Flow Monitoring", 1 March 2011 (2011-03-01), pages 1 - 10, XP055760446, Retrieved from the Internet <URL:https://kb.juniper.net/library/CUSTOMERSERVICE/GLOBAL_JTAC/BK16677/3500204-en.pdf> [retrieved on 20201216]
- MIRSKY ZTE CORP W LINGQIANG G ZHUI ZTE CORPORATION G: "Hybrid Two-Step Performance Measurement Method; draft-mirsky-ippm-hybrid-two-step-05.txt", no. 5, 15 April 2020 (2020-04-15), pages 1 - 11, XP015139136, Retrieved from the Internet <URL:https://tools.ietf.org/html/draft-mirsky-ippm-hybrid-two-step-05> [retrieved on 20200415]
- SONG H ET AL: "Postcard-based On-Path Flow Data Telemetry; draft-song-ippm-postcard-based-telemetry-07.txt", no. 7, 14 April 2020 (2020-04-14), pages 1 - 12, XP015139120, Retrieved from the Internet <URL:https://tools.ietf.org/html/draft-song-ippm-postcard-based-telemetry-07> [retrieved on 20200414]

## Description

### TECHNICAL FIELD

The present application relates to network communication, and more specifically to a system and method for a creating a distributed network flow record through packet marking.

### BACKGROUND

Network monitoring is a systematic effort to monitor parameters of a computer network in order to detect issues that degrade network performance. Network traffic analysis is used to deduce information from patterns collected during network monitoring.

Juniper Networks, "Juniper Flow Monitoring", (20110301), page 4, line 1 - page 6, discusses how J flow works. G. MIRSKY, W. LINGQIANG, G. ZHUI ZTE CORPORATION, "Hybrid Two-Step Performance Measurement Method; draft-mirsky-ippm-hybrid-two-step-05.txt", no. 5, (20200415), pages 1 - 11, IPPM WORKING GROUP, INTERNET ENGINEERING TASK FORCE, IETF; STANDARDWORKINGDRAFT, INTERNET SOCI, page 2, line 25 - page 8, line 21 introduces Hybrid Two-Step (HTS) as a new hybrid measurement method that allows achieving better accuracy of a measurement by separating the act of measuring or calculating the performance metric from the collecting and transporting this information. US 8 331 234 B provides systems and methods for collecting and analyzing packet data flows. US 6 839 751 B discloses a method of and monitor apparatus for analyzing a flow of packets passing through a connection point on a computer network. SONG H ET AL, "Postcard-based On-Path Flow Data Telemetry; draft-song-ippm-postcard-based-telemetry-07.txt", no. 7, (20200414), IPPM, INTERNET ENGINEERING TASK FORCE, IETF; STANDARDWORKINGDRAFT, INTERNET SOCIETY (ISOC), page 2, line 26 - page 9, line 13 describes a variation of the postcard mode on-path telemetry, the marking-based PBT (PBT-M).

### SUMMARY

According to a first aspect of the present disclosure, there is provided a method for generating a distributed flow record. In one embodiment, the method includes receiving a packet, and determining whether information related to a packet flow associated with the packet should be recorded in a local flow record table (LFRT) of the network device. When the information related to the packet flow associated with the packet should be recorded in a LFRT of the network device, the method determines whether a flow entry for the packet flow already exists in the LFRT. The method updates the flow entry for the packet flow in the LFRT with the information from the packet when the flow entry for the packet flow already exists in the LFRT. When the flow entry for the packet flow does not exist in the LFRT, the method determines whether there is sufficient available memory space to create the flow entry for the packet flow in the LFRT. When there is sufficient available memory space to create the flow entry for the packet flow in the LFRT, the method creates the flow entry for the packet flow in the LFRT and updates the flow entry for the packet flow with the information from the packet. The method sets a flow record bit in a packet header of the packet based on whether the information from the packet associated with the packet flow has been recorded as part of the distributed flow record. The method then forwards the packet.

In a first implementation form of the method according to the first aspect, the method extracts a flow identifier (ID) from the packet header of the packet to identify the packet flow associated with the packet.

In a second implementation form of the method according to the first aspect or any preceding implementation form of the first aspect, the method determines whether to record information related to a packet flow associated with the packet in the LFRT of the network device is based on whether the flow record bit in the packet header of the packet is marked.

In a third implementation form of the method according to the first aspect or any preceding implementation form of the first aspect, the flow record bit in the packet header of the edge network device is initially unmarked when the packet is received from a consumer side of the network.

In a fourth implementation form of the method according to the first aspect or any preceding implementation form of the first aspect, the method marks the flow record bit when the information from the packet associated with the packet flow is not recorded in the LFRT of the network device, and maintains the flow record bit as unmarked when the information from the packet associated with the packet flow is recorded in the LFRT of the network device.

In a fifth implementation form of the method according to the first aspect or any preceding implementation form of the first aspect, the method determines that the information related to the packet flow associated with the packet should be recorded in the LFRT of the network device when the flow record bit is marked.

In a sixth implementation form of the method according to the first aspect or any preceding implementation form of the first aspect, the method maintains the flow record bit as marked the flow record bit when the information from the packet associated with the packet flow is not recorded in the LFRT of the network device, and sets the flow record bit as unmarked when the information from the packet associated with the packet flow is recorded in the LFRT of the network device.

In a seventh implementation form of the method according to the first aspect or any preceding implementation form of the first aspect, the method sets the flow record bit as unmarked when forwarding the packet to the consumer side of the network.

In an eighth implementation form of the method according to the first aspect or any preceding implementation form of the first aspect, the method forwards a second packet to an overflow network device for enabling the overflow network device to record the information related to the packet flow associated with the packet prior to forwarding the packet to the consumer side of the network when the information related to the packet flow associated with the packet has not been recorded in the LFRT of any network device along a flow path of the packet.

In a ninth implementation form of the method according to the first aspect or any preceding implementation form of the first aspect, t the second packet is a copy of the packet.

In a tenth implementation form of the method according to the first aspect or any preceding implementation form of the first aspect, the second packet comprises the information related to the packet flow associated with the packet to be recorded in the LFRT of the overflow network device.

A second aspect relates to a network node comprising network communication means, a data storage means, and a processing means, the network node specially configured to perform any of the preceding implementation forms of the method according to the first aspect.

For the purpose of clarity, any one of the foregoing embodiments may be combined with any one or more of the other foregoing embodiments to create a new embodiment within the scope of the present disclosure.

These and other features, and the advantages thereof, will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram illustrating a network topology according to an embodiment of the present disclosure.
FIG. 2 is a flowchart illustrating a process for distributing a network flow record according to an embodiment of the present disclosure.
FIG. 3 is a schematic diagram illustrating a data packet according to an embodiment of the present disclosure.
FIG. 4 is a schematic diagram illustrating a first example of the process for distributing a network flow record according to an embodiment of the present disclosure.
FIG. 5 is a schematic diagram illustrating a second example of the process for distributing a network flow record according to an embodiment of the present disclosure.
FIG. 6 is a schematic diagram illustrating a third example of the process for distributing a network flow record according to an embodiment of the present disclosure.
FIG. 7 is a schematic diagram illustrating a network device according to an embodiment of the present disclosure.

### DETAILED DESCRIPTION

It should be understood at the outset that, although illustrative implementations of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

The disclosed embodiments resolve a flow record scalability issue (i.e., not enough on-chip memory on each network to record all active flows) by fully utilizing the available resources of multiple network devices throughout the network to distribute one logical flow record (FR) table to multiple devices using a FR bit as an in-band FR signaling mechanism. The disclosed embodiments enable a detailed and precise FR to be maintained, not just simple flow statistics (e.g., counter table) or a summary/estimation (e.g., sketch). Additionally, the disclosed embodiments enable information on all packet flows to be captured, not just a portion of the packet flows. The detailed FR for all flows is crucial for network visibility and operations, administration, and management (OAM) of the network. The data provided by the detailed FR can support network big data analytics, network artificial intelligence (AI), and automated network OAM.

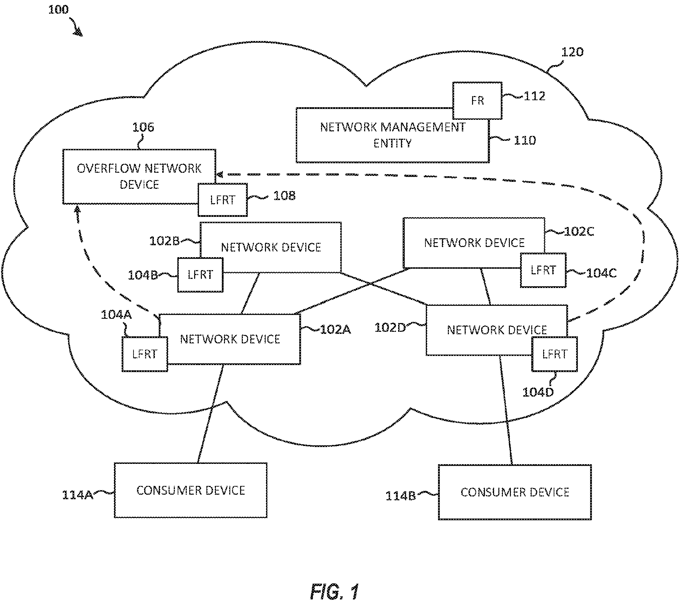

FIG. 1 is a schematic diagram illustrating a network topology 100 according to an embodiment of the present disclosure. The network topology 100 depicts user/consumer devices such as consumer device 114A and consumer device 114B that communicate data over a network 120. The network 120 can be any type of network including any type of wired or wireless network, or a combination thereof. The network 120 may include private networks (e.g., an internal network within a data center) and/or public networks such as the Internet. The network 120 includes a plurality of network devices (also referred to as network nodes) such as network device 102A, network device 102B, network device 102C, and network device 102D. The plurality of network devices 102A-102D can be any type of network device such as, but not limited to, a router or switch that forwards data within the network 120. The network 120 can also include a network management entity 110. The network management entity 110 can be configured to perform management functions for the network 120 such as, but not limited to, monitoring, testing, polling, configuring, analyzing, evaluating, and/or controlling the operation of the network 120.

In the depicted embodiment, each of the network devices 102A-102D includes a local flow record table (LFRT) 104A, 104B, 104C, and 104D used to maintain a flow record of network traffic (i.e., packet flows) passing through the respective network device. For example, the network device 102A stores a LFRT 104A, the network device 102B stores a LFRT 104B, the network device 102C stores a LFRT 104C, and the network device 102D stores a LFRT 104D. A packet flow is a sequence of packets sharing the same properties (e.g., Internet Protocol (IP) Source Address, IP Destination Address, Source Layer port, Destination Layer port, Class of Service, IP Protocol, and Source Interface) that are sent between a sending/source device and a receiving/destination device. For instance, for live streaming video, a packet flow contains media packets that are sent from the server to a television or other display device. A flow record may include, but is not limited to, a flow identifier (ID) (e.g., a 5-tuple header), total bytes, total packets, minimum packet length, maximum packet length, first seen packet time, last seen packet time, largest packet arriving time gap, maximum time-to-live (TTL), and minimum TTL. Each flow record entry for a packet flow may use a few tens of bytes of storage. The flow record can be used to monitor network bandwidth and traffic patterns; identify users, applications, and protocols that are consuming the most bandwidth; perform network threat detection (e.g., denial of service (DoS) attacks); and investigate network problems that cause congestion. Therefore, it is important to gain detailed information about all the active flows in a network for an efficient and secure network operation.

In an embodiment, to sustain the high throughput (i.e., a high rate of packet flows traversing the network device) the LFRT is stored using on-chip memory (i.e., memory located on a processor chip). On-chip memory enables faster read/write operations than regular system memory, and therefore decreases latency. However, because each network device only has limited on-chip memory, a single network device cannot capture the desired detailed information about all the active packet flows. Regularly, the number of active packet flows far exceeds the storage capacity of a network device's on-chip memory.

To address the above problem, in an embodiment, a network device is configured to mark or unmark a packet, using a designated flow record bit in the packet header, to inform the next network device that receives this packet whether the information associated with a packet flow of the packet has been recorded. If the information associated with a packet flow of the packet has not been recorded and the receiving network device has sufficient available memory space to record the information associated with a packet flow of the packet, then the receiving network device records the information associated with a packet flow of the packet in its LFRT. If the packet flow has not been recorded and the receiving network device does not have sufficient available memory space, the device forwards the packet on and the next network device along with the indication that the data flow has not been recorded. As before, if the next network device is able to record, it records the information associated with a packet flow of the packet in its LFRT. As before, if it is not able to record, the packet is forwarded with the indication that the flow has not been recorded. In accordance with an embodiment, a complete flow record of all active flows can be captured by the network devices using this distributed method because the method enables device coordination to find a network device that is able to record the flow.

In an embodiment, if the packet arrives at a network node that is the last network device (e.g., network device 102D) before being forwarded to a consumer/user device (e.g., consumer device 114B) and the packet indicates that the information associated with a packet flow of the packet has not been recorded in the LFRT of any prior network device along the flow path of the packet, and the network device determines that it does not have sufficient available memory space to record the information associated with the packet flow of the packet in its LFRT, a copy of the packet can be routed to an overflow network device 106. In an embodiment, the network address of the overflow network device 106 is specified by a network administrator. The overflow network device 106 can record the information associated with the packet flow of the packet in its LFRT 108. In an embodiment, the LFRT 108 of the overflow network device 106 can be in system memory, as opposed to on-chip memory, because the overflow network device 106 is not concerned with maintaining a high throughput. This enables the overflow network device 106 to be able to capture all the uncaptured active flow information.

In an embodiment, a network management entity 110 collects all the flow entry records from each of the network devices 102A-102D and the overflow network device 106 to form a complete flow record (FR) 112 of all the packet flows in the network 120. In an embodiment, a flow record entry in the LFRT 104A-104D of a network device 102A-102D is exported to the network management entity 110 on a regular basis, when the packet flow is inactive for a certain time (e.g., no new packets are received for the flow in last 30 seconds), and/or when the packet flow lasts longer than a predetermined active timer (e.g., 30 minutes). For instance, a large file download that lasts longer than 30 minutes may be broken into multiple flows or flow record entries in a LFRT 104A-104D of a network device 102A-102D. The network management entity 110 is configured to combine these multiple flows or flow record entries into one showing the total download. The network management entity 110 uses the complete FR 112 of all the packet flows in the network 120 to monitor network conditions to ensure efficient and secure network operation.

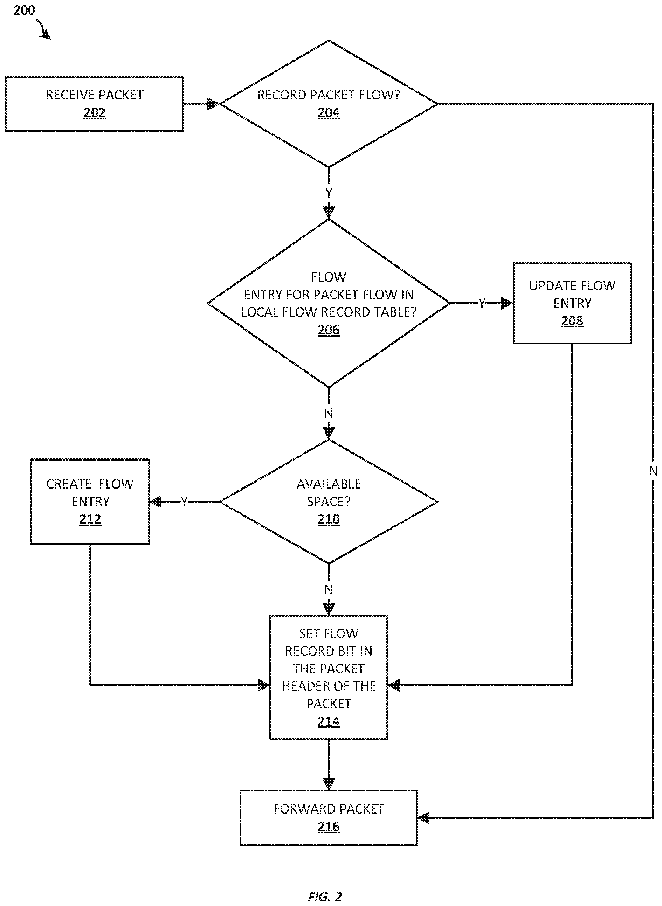

FIG. 2 is a flowchart illustrating a process 200 for distributing a network flow record according to an embodiment of the present disclosure. The process 200 can be performed by any network device along a flow path of a packet such as network devices 102A-102D in FIG. 1. In an embodiment, the packet includes a flow record bit in the packet header of the packet. The flow record bit is used to indicate whether a flow entry for a packet flow associated with the packet has been recorded in a flow record by any of the network devices along the flow path of the packet. The process 200 begins, at step 202, by receiving a packet. In an embodiment, if the packet is received from a consumer side of the network by an edge network device (e.g., received by network device 102A from consumer device 114A in FIG. 1), the flow record bit in the packet header of by the edge network device is initially unmarked (e.g., set to zero) because a consumer device does nothing with the flow record bit in the packet header of the packet. At step 204, the process 200 determines whether information related to a packet flow associated with the packet should be recorded in a LFRT of the network device. In an embodiment, this determination is based on whether the packet is received from a consumer side of the network (i.e., from a consumer device) or from a network side of the network (i.e., from another network device within the network). In an embodiment, if the packet is received from a consumer side of the network, the process 200 automatically determines that the information related to a packet flow associated with the packet should be recorded in a LFRT of the network device. If the packet is received from a network side of the network, the process 200 checks the flow record bit in the packet header of the packet to determine whether information related to the packet flow associated with the packet should be recorded in a LFRT of the network device. In an embodiment, the process 200 determines that the information related to a packet flow associated with the packet should be recorded in a LFRT of the network device if the flow record bit in the packet header is marked (e.g., flow record bit set to one), and determines that the information related to a packet flow associated with the packet does not need to be recorded in a LFRT of the network device (i.e., information already recorded in LFRT of an upstream network device) if the flow record bit in the packet header is unmarked (e.g., flow record bit set to zero).

If the process 200, at step 204, determines that the information related to the packet flow associated with the packet does not need to be recorded in a LFRT of the network device, the process 200, at step 216, forwards the packet either to a next hop network device along the flow path of the packet or to the consumer device if the consumer device is the next hop on the flow path of the packet.

If the process 200, at step 204, determines that the information related to a packet flow associated with the packet should be recorded in a LFRT of the network device, the process 200, at step 206, determines whether a flow entry for the packet flow already exists in the LFRT of the network device. If a flow entry for the packet flow already exists in the LFRT of the network device, the process 200, at step 208, updates the flow entry for the packet flow in the LFRT with the information from the packet. If a flow entry for the packet flow does not already exist in the LFRT of the network device, the process 200, at step 210, determines whether there is sufficient available memory space to create the flow entry for the packet flow in the LFRT.

If, at step 210, the process 200 determines that there is sufficient available memory space to create the flow entry for the packet flow in the LFRT of the network device, the process 200, at step 212, creates the flow entry for the packet flow in the LFRT and updates the flow entry for the packet flow with the information from the packet, and then, at step 214, sets, maintains, or unmarks the flow record bit in the packet header of the packet to indicate that the packet flow information associated with the packet has been recorded.

If, at step 210, the process 200 determines that there is not sufficient available memory space to create the flow entry for the packet flow in the LFRT of the network device, the process 200, at step 214, sets, maintains, or marks the flow record bit in the packet header of the packet to indicate that the packet flow information associated with the packet has not been recorded.

At step 216, the process 200 forwards the packet either to a next hop network device along the flow path of the packet or to the consumer device if the consumer device is the next hop on the flow path of the packet. In an embodiment, if the flow record bit in the packet header of the packet indicates that the packet flow information associated with the packet has not been recorded by any network device along the flow path of the packet, and the next hop is a destination consumer device, the process 200 sends a copy of the packet to a designated overflow network device (e.g., overflow network device 106 in FIG. 1) to enable the designated overflow network device to record the packet flow information associated with the packet. In an alternative embodiment, the process 200 sends only the packet flow information associated with the packet that needs to be recorded to the designated overflow network device. This embodiment saves network bandwidth, but requires that the sending network device perform some packet processing to identify the packet flow information associated with the packet that needs to be recorded. In an embodiment, the process 200 is configured to unmark the flow record bit in the packet header of the packet prior to forwarding the packet to a consumer device.

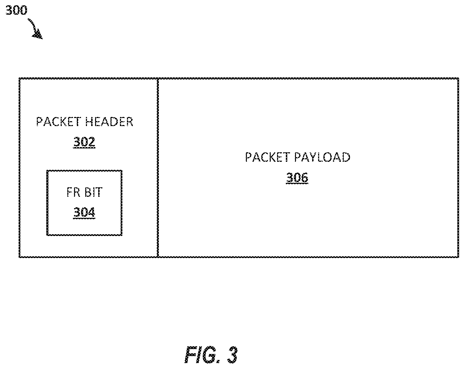

FIG. 3 is a schematic diagram illustrating a data packet 300 according to an embodiment of the present disclosure. The data packet 300 is not limited to any particular protocol. The data packet 300 includes a packet header 302 and packet payload 306. The packet header 302 is the portion of the data packet 300 that contains addressing and other data that allows the data packet 300 to reach its intended destination. For example, the packet header 302 may include length of packet, synchronization bits, packet/sequence number, protocol information, source/originating address of sending device, and destination address of receiving device. The packet payload 306 contains the actual data being carried by the packet.

As stated above, in an embodiment, the packet header 302 includes a FR bit 304 used to indicate whether a flow entry for a packet flow associated with the packet has been recorded in a flow record by any of the network devices along the flow path of the packet. The FR bit 304 can be any designated or reserved bit in the packet header 302. In an embodiment, the FR bit 304 in the packet header 302, depending on a packet protocol, is designated by particular a standards board or committee. In an alternative embodiment, the FR bit 304 in the packet header 302 can be user-specified (e.g., within a user-controlled network such as, but not limited to, a private network or a data center) and used as disclosed herein for recording information on all flows within the user-controlled network.

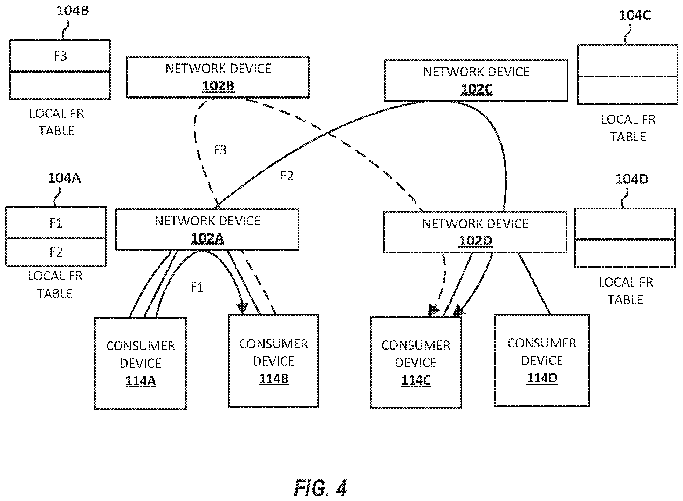

FIG. 4 is a schematic diagram illustrating a first example of the process for distributing a network flow record according to an embodiment of the present disclosure. For illustration purposes, each of the network devices 102A-102D contains a LFRT 104A-104D that can store up to two flow record entries. The network device 102A is an edge network device that is connected to consumer device 114A and consumer device 114B. The network device 102D is an edge network device that is connected to consumer device 114C and consumer device 114D. In the depicted embodiment, a first packet flow (F1) is transmitted from consumer device 114A to consumer device 114B over a flow path consisting of just the network device 102A (i.e., consumer device 114A → network device 102A → consumer device 114B). Since this is the first packet flow traversing the network device 102A, the network device 102A creates a flow entry for F1 in its LFRT 104A and records the flow information of F1. In an embodiment, the network device 102A maintains the FR bit as unmarked in the packet header of the packets associated with F1 to indicate that a flow record entry has been created for F1. The network device 102A forwards the packet associated with F1 on to the next hop, which in this case is the consumer device 114B.

A second packet flow (F2) is transmitted from consumer device 114A to consumer device 114C over a flow path consisting network device 102A → network device 102C → network device 102D. Again, because the LFRT 104A is able to store up to two flow record entries, the network device 102A creates a flow entry for F2 in its LFRT 104A and records the flow information of F2. The network device 102A maintains the FR bit as unmarked in the packet header of the packets associated with F2 to indicate that a flow record entry has been created for F2. The network device 102A forwards the packet associated with F1 on to the next hop, which is the network device 102C. The network device 102C simply forwards the packet on along the flow path because the flow record entry for F2 has already been created by the network device 102A.

A third packet flow (F3) is transmitted from consumer device 114B to consumer device 114C over a flow path consisting network device 102A→ network device 102B → network device 102D. Because the LFRT 104A is currently full, the network device 102A is unable to create a flow entry for F3 in the LFRT 104A. In this case, the network device 102A marks the FR bit in the packet header of the packets associated with F3 to indicate that a flow record entry has not been created for F3. The network device 102A forwards the packet for F3 to the network device 102B, which is the next hop along the flow path. The network device 102B determines that a flow record entry has not been created for F3 based the marked FR bit. The network device 102B determines that its LFRT 104B has sufficient space to store a flow entry for F3. Therefore, the network device 102B creates the flow entry for F3 and records the flow information of F3. The network device 102B unmarks the FR bit in the packet header of the packets associated with F3 to indicate that a flow record entry has been created for F3. The network device 102B forwards the packet associated with F1 on to the next hop, which is the network device 102D. The network device 102D simply forwards the packet to the consumer device 114C because the flow record entry for F3 has already been created by the network device 102B.

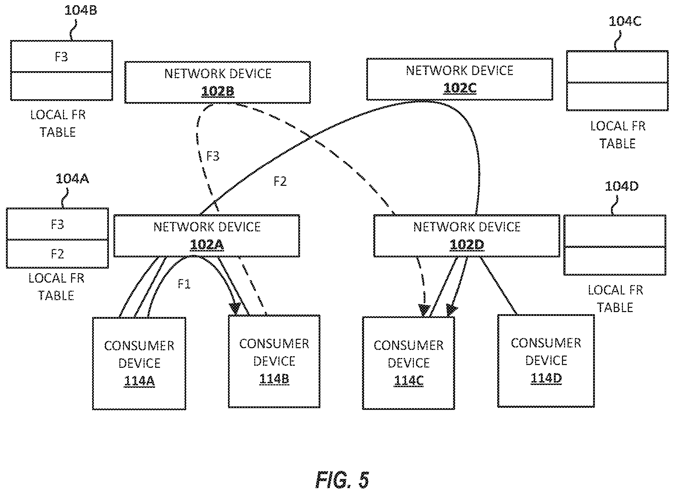

FIG. 5 is a schematic diagram illustrating a second example of the process for distributing a network flow record according to an embodiment of the present disclosure. This second example illustrates that a flow entry record for a particular flow (e.g., flow record entry for F3) can be stored on multiple network devices at the same time. This situation can occur when a previously full LFRT suddenly has available free space. For instance, as stated above, the individual flow entries in a LFRT can be exported to a network management entity (e.g., the network management entity 110 in FIG. 1) on a regular basis, when the packet flow is inactive for a certain time, and/or when the packet flow lasts longer than a predetermined active timer. Assume in the first example shown in FIG. 4, the flow record entry for F1 that was stored in the LFRT 104A of the network device 102A is exported to a network management entity. When this occurs, the network device 102A frees up the space in the LFRT 104A that was being used by the flow record entry for F1. Assume that packets for F3 are still being transmitted from consumer device 114B to consumer device 114C over the flow path consisting network device 102A→ network device 102B → network device 102D after the network device 102A frees up the space in the LFRT 104A. When the network device 102A receives the next packet for F3, the network device 102A determines that it should create a flow record entry for F3 because the network device 102A is the first network device along the flow path and the FR bit in the packet header is unmarked. Thus, the network device 102A creates a flow record entry for F3 in its LFRT 104A and records the flow information of F3 associated with the packet. The network device 102A leaves the FR bit in the packet header as unmarked to indicate that the flow information of F3 associated with the packet has been recorded. The network device 102A forwards the packet for F3 to the network device 102B, which is the next hop along the flow path. The network device 102B determines that the flow information of F3 associated with the packet has been recorded because the FR bit in the packet header of the packet is unmarked. Therefore, even though the network device 102B has a flow record entry for F3 in its LFRT 104B, it does not need to record the flow information associated with the packet. Instead, the network device 102B simply forwards the packet on to the next hop. When the flow record entries for F3 from LFRT 104A and LFRT 104B are exported to a network management entity, the network management entity is configured to combine the separate flow record entries for F3 into a single flow record entry for F3.

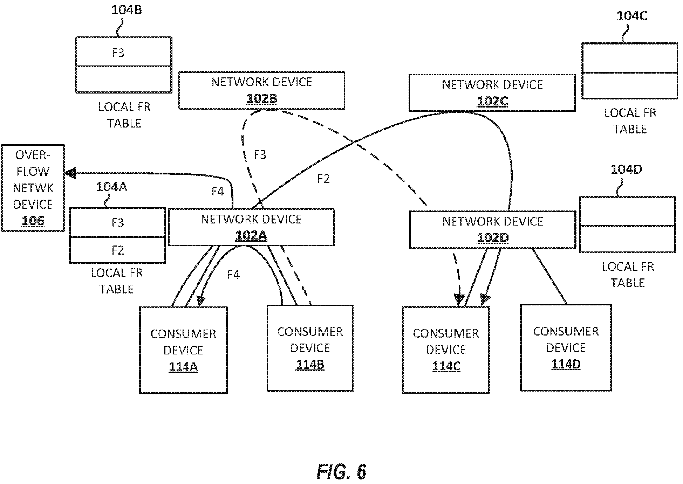

FIG. 6 is a schematic diagram illustrating a third example of the process for distributing a network flow record according to an embodiment of the present disclosure. The third example illustrates that a copy of a packet of a flow can be forwarded to a designated server such as the overflow network device 106 in FIG. 1 when the last hop network device does not have sufficient available space to create a flow entry record for the flow and the FR bit in the packet header of the packet indicates that the flow information associated with the packet flow has not been recorded. For instance, assume in the second example in FIG. 5, that a fourth packet flow (F4) is initiated from the consumer device 114B to the consumer device 114A over the network device 102A. When the network device 102A receives a packet of the F4, the network device 102A determines that the flow information associated with the packet has not been recorded in flow record entry, that the LFRT 104A of the network device 102A does not have sufficient available space to create a new flow record entry for the F4, and that the next hop along the flow path is the consumer device 114A. In this case, in an embodiment, the network device 102A is configured to mirror (i.e., create a copy) the packet to the overflow network device 106. The overflow network device 106 performs the function of recording the flow information associated with the packet of the F4. The network device 102A sends the original packet to the consumer device 114A. A network management entity collects the flow record entries from the overflow network device 106 along with the flow record entries from the other network devices 102A-102D to create a complete full flow record of all active flows in the network. Accordingly, the disclosed embodiments resolve the FR scalability issue (i.e., not enough on-chip memory on each network to record all active flows) by fully utilizing the available resources of multiple network devices throughout the network to distribute one logical FR table to multiple devices using a FR bit as an in-band FR signaling mechanism.

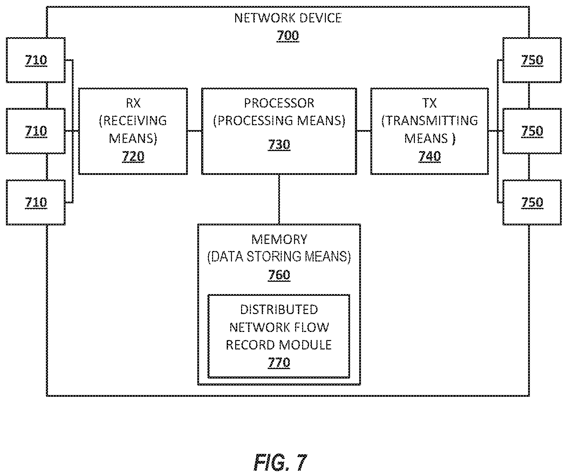

FIG. 7 is a schematic diagram illustrating a network device 700 according to an embodiment of the present disclosure. The network device 700 can be any type of network node such as, but not limited to, any router, switch, and controller, which are used by the service providers around world. In an embodiment, the network devices 102A-102D, the overflow network device 106, and/or the network management entity 110 can be implemented using the network device 700. The network device 700 includes receiver units (RX) 720 or receiving means for receiving data via ingress ports 710. The network device 700 also includes transmitter units (TX) 740 or transmitting means for transmitting via data egress ports 750.

The network device 700 includes a memory 760 or data storing means for storing the instructions and various data. The memory 760 can be any type of or combination of memory components capable of storing data and/or instructions. For example, the memory 760 can include volatile and/or non-volatile memory such as read-only memory (ROM), random access memory (RAM), ternary content-addressable memory (TCAM), and/or static random-access memory (SRAM). The memory 760 can also include one or more disks, tape drives, and solid-state drives. In some embodiments, the memory 760 can be used as an over-flow data storage device to store programs when such programs are selected for execution, and to store instructions and data that are read during program execution.

The network device 700 has one or more processor 730 or other processing means (e.g., central processing unit (CPU)) to process instructions. The processor 730 may be implemented as one or more CPU chips, cores (e.g., as a multi-core processor), field-programmable gate arrays (FPGAs), application specific integrated circuits (ASICs), and digital signal processors (DSPs). The processor 730 is communicatively coupled via a system bus with the ingress ports 710, RX 720, TX 740, egress ports 750, and memory 760. The processor 730 can be configured to execute instructions stored in the memory 760. Thus, the processor 730 provides a means for performing any computational, comparison, determination, initiation, configuration, or any other action corresponding to the claims when the corresponding instruction is executed by the processor. In some embodiments, the memory 760 can be memory that is integrated with the processor 730.

In one embodiment, the memory 760 stores a distributed network flow record module 770. The distributed network flow record module 770 includes data and executable instructions for implementing the disclosed embodiments. For instance, the distributed network flow record module 770 can include instructions for implementing the method described in FIG. 2. The inclusion of the distributed network flow record module 770 substantially improves the functionality of the network device 700 by enabling all network flows to be captured by distributing the flow record to a plurality of network devices along a flow path of a packet.

The present examples are to be considered as illustrative and not restrictive, and the disclosure is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise.

## Claims

1. A method (200) performed by a network device for generating a distributed flow record, the method comprising:
receiving (202) a packet;
determining (204) whether information related to a packet flow associated with the packet should be recorded in a local flow record table, LFRT, of the network device;
determining (206) whether a flow entry for the packet flow already exists in the LFRT when the information related to the packet flow associated with the packet should be recorded in a LFRT of the network device;
updating (208) the flow entry for the packet flow in the LFRT with the information from the packet when the flow entry for the packet flow already exists in the LFRT;
determining (210) whether there is sufficient available memory space to create the flow entry for the packet flow in the LFRT when the flow entry for the packet flow does not exist in the LFRT;
creating (212) the flow entry for the packet flow in the LFRT and updating the flow entry for the packet flow with the information from the packet when there is sufficient available memory space to create the flow entry for the packet flow in the LFRT;
setting (214) a flow record bit in a packet header of the packet based on whether the information from the packet associated with the packet flow has been recorded as part of the distributed flow record; and
forwarding (216) the packet.

2. The method (200) according to claim 1, further comprising extracting a flow identifier, ID, from the packet header of the packet to identify the packet flow associated with the packet.

3. The method (200) according to any of claims 1-2, wherein determining whether to record information related to a packet flow associated with the packet in the LFRT of the network device is based on whether the flow record bit in the packet header of the packet is marked.

4. The method (200) according to claim 3, wherein the flow record bit in the packet header of the edge network device is initially unmarked when the packet is received from a consumer side of the network.

5. The method (200) according to claim 4, wherein setting the flow record bit in the packet header of the packet comprises:
marking the flow record bit when the information from the packet associated with the packet flow is not recorded in the LFRT of the network device, and
maintaining the flow record bit as unmarked when the information from the packet associated with the packet flow is recorded in the LFRT of the network device.

6. The method (200) according to claim 3, wherein the method determines that the information related to the packet flow associated with the packet should be recorded in the LFRT of the network device when the flow record bit is marked.

7. The method (200) according to claim 6, wherein setting the flow record bit in the packet header of the packet comprises:
maintaining the flow record bit as marked when the information from the packet associated with the packet flow is not recorded in the LFRT of the network device, and setting the flow record bit as unmarked when the information from the packet associated with the packet flow is recorded in the LFRT of the network device.

8. The method (200) according to claim 4, wherein setting the flow record bit in the packet header of the packet comprises setting the flow record bit as unmarked when forwarding the packet to the consumer side of the network.

9. The method (200) according to claim 8, further comprising forwarding a second packet to an overflow network device for enabling the overflow network device to record the information related to the packet flow associated with the packet prior to forwarding the packet to the consumer side of the network when the information related to the packet flow associated with the packet has not been recorded in the LFRT of any network device along a flow path of the packet.

10. The method (200) according to claim 9, wherein the second packet is a copy of the packet.

11. The method (200) according to claim 8, wherein the second packet comprises the information related to the packet flow associated with the packet to be recorded in the LFRT of the overflow network device.

12. The method (200) according to any of claims 1-11, further comprising exporting the flow entry for the packet flow in the LFRT to a network management entity.

13. The method (200) according to any of claims 1-12, wherein the flow record bit in the packet header of the packet is marked when a value of the flow record bit is set to one, and wherein the flow record bit in the packet header of the packet is unmarked when the value of the flow record bit is set to zero.

14. The method (200) according to any of claims 1-12, wherein the flow record bit in the packet header of the packet is marked when a value of the flow record bit is set to zero, and wherein the flow record bit in the packet header of the packet is unmarked when the value of the flow record bit is set to one.

15. A network node (700), wherein the network node (700) is configured to implement the method (200) according to any one of the claims 1-14.

## Patentansprüche

1. Verfahren (200), durchgeführt durch eine Netzvorrichtung zum Erzeugen einer verteilten Flussaufzeichnung, wobei das Verfahren Folgendes umfasst:
Empfangen (202) eines Pakets;
Bestimmen (204), ob Informationen im Zusammenhang mit einem mit dem Paket assoziierten Paketfluss in einer lokalen Flussaufzeichnungstabelle bzw. LFRT der Netzvorrichtung aufgezeichnet werden sollten;
Bestimmen (206), ob bereits ein Flusseintrag für den Paketfluss in der LFRT besteht, wenn die Informationen im Zusammenhang mit dem mit dem Paket assoziierten Paketfluss in einer LFRT der Netzvorrichtung aufgezeichnet werden sollten;
Aktualisieren (208) des Flusseintrags für den Paketfluss in der LFRT mit den Informationen aus dem Paket, wenn der Flusseintrag für den Paketfluss bereits in der LFRT besteht;
Bestimmen (210), ob ausreichend verfügbarer Speicherplatz vorhanden ist, um den Flusseintrag für den Paketfluss in der LFRT zu erstellen, wenn der Flusseintrag für den Paketfluss nicht in der LFRT besteht;
Erstellen (212) des Flusseintrags für den Paketfluss in der LFRT und Aktualisieren des Flusseintrags für den Paketfluss mit den Informationen aus dem Paket, wenn ausreichend verfügbarer Speicherplatz zum Erstellen des Flusseintrags für den Paketfluss in der LFRT vorhanden ist;
Setzen (214) eines Flussaufzeichnungsbits in einem Paketheader des Pakets basierend darauf, ob die Informationen aus dem mit dem Paketfluss assoziierten Paket als Teil der verteilten Flussaufzeichnung aufgezeichnet wurden; und
Weiterleiten (216) des Pakets.

2. Verfahren (200) nach Anspruch 1, ferner umfassend Extrahieren einer Flusskennung bzw. Fluss-ID aus dem Paketheader des Pakets, um den mit dem Paket assoziierten Paketfluss zu identifizieren.

3. Verfahren (200) nach einem der Ansprüche 1-2, wobei das Bestimmen, ob Informationen im Zusammenhang mit einem mit dem Paket assoziierten Paketfluss in der LFRT der Netzvorrichtung aufgezeichnet werden sollen, darauf basiert, ob das Flussaufzeichnungsbit in dem Paketheader des Pakets markiert ist.

4. Verfahren (200) nach Anspruch 3, wobei das Flussaufzeichnungsbit in dem Paketheader der Edge-Netzvorrichtung anfänglich unmarkiert ist, wenn das Paket von einer Verbraucherseite des Netzes empfangen wird.

5. Verfahren (200) nach Anspruch 4, wobei das Setzen des Flussaufzeichnungsbits in dem Paketheader des Pakets Folgendes umfasst:
Markieren des Flussaufzeichnungsbits, wenn die Informationen aus dem mit dem Paketfluss assoziierten Paket nicht in der LFRT der Netzvorrichtung aufgezeichnet sind, und
Beibehalten des Flussaufzeichnungsbits als unmarkiert, wenn die Informationen aus dem mit dem Paketfluss assoziierten Paket in der LFRT der Netzvorrichtung aufgezeichnet sind.

6. Verfahren (200) nach Anspruch 3, wobei das Verfahren bestimmt, dass die Informationen im Zusammenhang mit dem mit dem Paket assoziierten Paketfluss in der LFRT der Netzvorrichtung aufgezeichnet werden sollten, wenn das Flussaufzeichnungsbit markiert ist.

7. Verfahren (200) nach Anspruch 6, wobei das Setzen des Flussaufzeichnungsbits in dem Paketheader des Pakets Folgendes umfasst:
Beibehalten des Flussaufzeichnungsbits als markiert, wenn die Information aus dem mit dem Paketfluss assoziierten Paket nicht in der LFRT der Netzvorrichtung aufgezeichnet sind, und Setzen des Flussaufzeichnungsbits als unmarkiert, wenn die Informationen aus dem mit dem Paketfluss assoziierten Paket in der LFRT der Netzvorrichtung aufgezeichnet sind.

8. Verfahren (200) nach Anspruch 4, wobei das Setzen des Flussaufzeichnungsbits in dem Paketheader des Pakets Setzen des Flussaufzeichnungsbits als unmarkiert beim Weiterleiten des Pakets an die Verbraucherseite des Netzes umfasst.

9. Verfahren (200) nach Anspruch 8, ferner umfassend Weiterleiten eines zweiten Pakets an eine Überlaufnetzvorrichtung, um zu ermöglichen, dass die Überlaufnetzvorrichtung die Informationen im Zusammenhang mit dem mit dem Paket assoziierten Paketfluss vor dem Weiterleiten des Pakets an die Verbraucherseite des Netzes aufzeichnet, wenn die Informationen im Zusammenhang mit dem mit dem Paket assoziierten Paketfluss in der LFRT keines Netzwerks entlang eines Flusspfads des Pakets aufgezeichnet wurden.

10. Verfahren (200) nach Anspruch 9, wobei das zweite Paket eine Kopie des Pakets ist.

11. Verfahren (200) nach Anspruch 8, wobei das zweite Paket die Informationen im Zusammenhang mit dem mit dem Paket assoziierten Paketfluss umfasst, die in der LFRT der Überlaufnetzvorrichtung aufzuzeichnen sind.

12. Verfahren (200) nach einem der Ansprüche 1-11, ferner umfassend Exportieren des Flusseintrags aus dem Paketfluss in der LFRT zu einer Netzverwaltungsentität.

13. Verfahren (200) nach einem der Ansprüche 1-12, wobei das Flussaufzeichnungsbit in dem Paketheader des Pakets markiert ist, wenn ein Wert des Flussaufzeichnungsbits auf eins gesetzt ist, und wobei das Flussaufzeichnungsbit in dem Paketheader des Pakets unmarkiert ist, wenn der Wert des Flussaufzeichnungsbits auf null gesetzt ist.

14. Verfahren (200) nach einem der Ansprüche 1-12, wobei das Flussaufzeichnungsbit in dem Paketheader des Pakets markiert ist, wenn ein Wert des Flussaufzeichnungsbits auf null gesetzt ist, und wobei das Flussaufzeichnungsbit in dem Paketheader des Pakets unmarkiert ist, wenn der Wert des Flussaufzeichnungsbits auf eins gesetzt ist.

15. Netzknoten (700), wobei der Netzknoten (700) dazu ausgelegt ist, das Verfahren (200) nach einem der Ansprüche 1-14 zu implementieren.

## Revendications

1. Procédé (200) réalisé par un dispositif de réseau pour générer un enregistrement de flux distribué, le procédé comprenant :
la réception (202) d'un paquet ;
la détermination (204) si des informations relatives à un flux de paquets associé au paquet doivent être enregistrées dans une table d'enregistrement de flux local, LFRT, du dispositif de réseau ;
la détermination (206) si une entrée de flux pour le flux de paquets existe déjà dans la LFRT lorsque les informations relatives au flux de paquets associé au paquet doivent être enregistrées dans une LFRT du dispositif de réseau ;
la mise à jour (208) de l'entrée de flux pour le flux de paquets dans la LFRT avec les informations du paquet lorsque l'entrée de flux pour le flux de paquets existe déjà dans la LFRT ;
la détermination (210) s'il y a suffisamment d'espace mémoire disponible pour créer l'entrée de flux pour le flux de paquets dans la LFRT lorsque l'entrée de flux pour le flux de paquets n'existe pas dans la LFRT ;
la création (212) de l'entrée de flux pour le flux de paquets dans la LFRT et la mise à jour de l'entrée de flux pour le flux de paquets avec les informations du paquet lorsqu'il y a suffisamment d'espace mémoire disponible pour créer l'entrée de flux pour le flux de paquets dans la LFRT ;
la définition (214) d'un bit d'enregistrement de flux dans un en-tête de paquet du paquet sur la base du fait que les informations du paquet associé au flux de paquets ont été enregistrées dans le cadre de l'enregistrement de flux distribué ; et
la transmission (216) du paquet.

2. Procédé (200) selon la revendication 1, comprenant en outre l'extraction d'un identifiant de flux, ID, à partir de l'en-tête de paquet du paquet pour identifier le flux de paquets associé au paquet.

3. Procédé (200) selon l'une quelconque des revendications 1 et 2, la détermination de l'enregistrement ou non des informations relatives à un flux de paquets associé au paquet dans la LFRT du dispositif de réseau étant basée sur le fait que le bit d'enregistrement de flux dans l'en-tête de paquet du paquet est marqué ou non.

4. Procédé (200) selon la revendication 3, le bit d'enregistrement de flux dans l'en-tête de paquet du dispositif de réseau périphérique étant initialement non marqué lorsque le paquet est reçu d'un côté consommateur du réseau.

5. Procédé (200) selon la revendication 4, la définition du bit d'enregistrement de flux dans l'en-tête de paquet du paquet comprenant :
le marquage du bit d'enregistrement de flux lorsque les informations du paquet associé au flux de paquets ne sont pas enregistrées dans la LFRT du dispositif de réseau, et
le maintien du bit d'enregistrement de flux non marqué lorsque les informations du paquet associé au flux de paquets sont enregistrées dans la LFRT du dispositif de réseau.

6. Procédé (200) selon la revendication 3, le procédé déterminant que les informations relatives au flux de paquets associé au paquet doivent être enregistrées dans la LFRT du dispositif de réseau lorsque le bit d'enregistrement de flux est marqué.

7. Procédé (200) selon la revendication 6, la définition du bit d'enregistrement de flux dans l'en-tête de paquet du paquet comprenant :
le maintien du bit d'enregistrement de flux comme marqué lorsque les informations du paquet associé au flux de paquets ne sont pas enregistrées dans la LFRT du dispositif de réseau, et la définition du bit d'enregistrement de flux comme non marqué lorsque les informations du paquet associé au flux de paquets sont enregistrées dans la LFRT du dispositif de réseau.

8. Procédé (200) selon la revendication 4, la définition du bit d'enregistrement de flux dans l'en-tête de paquet du paquet comprenant la définition du bit d'enregistrement de flux comme non marqué lors de l'acheminement du paquet vers le côté consommateur du réseau.

9. Procédé (200) selon la revendication 8, comprenant en outre la transmission d'un deuxième paquet à un dispositif de réseau de débordement pour permettre au dispositif de réseau de débordement d'enregistrer les informations relatives au flux de paquets associé au paquet avant de transmettre le paquet au côté consommateur du réseau lorsque les informations relatives au flux de paquets associé au paquet n'ont pas été enregistrées dans la LFRT de tout dispositif de réseau le long d'un chemin de flux de paquet.

10. Procédé (200) selon la revendication 9, le second paquet étant une copie du paquet.

11. Procédé (200) selon la revendication 8, le deuxième paquet comprenant les informations relatives au flux de paquets associé au paquet à enregistrer dans la LFRT du dispositif de réseau de débordement.

12. Procédé (200) selon l'une quelconque des revendications 1 à 11, comprenant en outre l'exportation de l'entrée de flux pour le flux de paquets dans la LFRT vers une entité de gestion de réseau.

13. Procédé (200) selon l'une quelconque des revendications 1 à 12, le bit d'enregistrement de flux dans l'en-tête de paquet du paquet étant marqué lorsqu'une valeur du bit d'enregistrement de flux est fixée à un, et le bit d'enregistrement de flux dans l'en-tête de paquet du paquet étant non marqué lorsque la valeur du bit d'enregistrement de flux est fixée à zéro.

14. Procédé (200) selon l'une quelconque des revendications 1 à 12, le bit d'enregistrement de flux dans l'en-tête de paquet du paquet étant marqué lorsqu'une valeur du bit d'enregistrement de flux est fixée à zéro, et le bit d'enregistrement de flux dans l'en-tête de paquet du paquet étant non marqué lorsque la valeur du bit d'enregistrement de flux est fixée à un.

15. Nœud de réseau (700), le nœud de réseau (700) étant configuré pour mettre en œuvre le procédé (200) selon l'une quelconque des revendications 1 à 14.
